# EUROPEAN PATENT SPECIFICATION

(11) **EP 4 388 913 B1**
(45) Date of publication and mention of the grant of the patent: **10.09.2025**
(21) Application number: 23207863.4
(22) Date of filing: 06.11.2023
(51) Int. Cl.: A43B 1/00, A43B 7/00

(54) **VIBRATION MODULE EQUIPPED WITH SECTION-TYPE VIBRATION PLATES USING MAGNETIC FORCE**
VIBRATIONSMODUL MIT ABSCHNITTSVIBRATIONSPLATTEN UNTER VERWENDUNG VON MAGNETKRAFT
MODULE DE VIBRATION ÉQUIPÉ DE PLAQUES DE VIBRATION DE TYPE SECTIONNEL UTILISANT UNE FORCE MAGNÉTIQUE

(30) Priority: 20.12.2022 KR 20220178837
(43) Date of publication of application: 26.06.2024
(73) Proprietor: Lee, Cheonggeun, Cheonan-si Chungcheongnam-do 31066 (KR)
(72) Inventor: Lee, Cheonggeun, Cheonan-si Chungcheongnam-do 31066 (KR)
(74) Representative: Valet Patent Services Limited

(56) References cited:
- WO-A1-2019/168214
- DE-U1- 202013 000 819
- KR-A- 20210 103 139
- KR-B1- 102 149 055
- US-A1- 2012 030 970

## Description

### BACKGROUND

### 1. Technical Field

The present invention relates generally to a vibration module equipped with section-type vibration plates performing up and down amplitude movement by means of magnetic force, and more particularly to a vibration module equipped with section-type vibration plates using magnetic force in which vibration plates are branched off and are each then branched into two, thus forming structures that face each other, so that the vibration plates perform up and down amplitude movement based on multiple points when external force is generated, with the result that the present invention transmits uniform vibration to the outside while increasing the vibration period.

### 2. Description of the Related Art

Shoes are items that people wear on their feet when standing on the ground or walking, and most people spend a lot of time wearing shoes. Accordingly, a lot of research has been conducted to provide functionality to shoes that are worn for such a long time. In particular, a lot of effort has been made to develop functionality that can improve wearers' health.

In the past, as examples, there have been attempts to introduce shock-absorbing structures such as elastic members or air cushions into the soles of shoes in order to relieve shock when walking, attempts to round the soles of shoes in order to enable the use of the overall soles of shoes when walking, and attempts to introduce structures capable of generating vibration within the soles of shoes.

In this case, as a technology related to a vibration device that stimulates the sole of a wearer's foot by generating vibration using a magnet when walking, which can help relieve fatigue or boredom and improve health, there is presented Korean Patent No. 10-1073499 (registered on October 7, 2011; hereinafter referred to as "Document 1") entitled "Magnetic Vibration Device Using Pressure."

Document 1 discloses a magnetic vibration device including a case configured such that the shape thereof changes due to external pressure and it has a restoring force when the shape changes, and a vibration means provided inside the case and configured to generate vibration by means of a magnet in association with the changing shape of the case, wherein the vibration means includes: guide members installed inside the case and including first and second levers coupled to each other so that they perform a sliding operation in response to a change in the shape of the case; a vibration plate configured such that one end thereof is fixed to one of the first and second levers and is slidably operated together; a first magnet provided at the other end of the vibration plate; and a second magnet coupled to one of the first and second levers to which the vibration plate is not coupled and configured to generate a repulsive force for one surface of the first magnet during the sliding operation of the vibration plate.

As another technology, there is presented Korean Patent No. 10-1978880 (registered on May 9, 2019; hereinafter referred to as "Document 2") entitled "Vibrator using Magnetic Force and Shoe containing the Same."

Document 2 discloses a vibrator for generating vibration by means of magnetic force, including: a case; a first fixed magnet formed on at least a portion of the upper side of the case; a second fixed magnet formed in an area facing the first fixed magnet on the lower side of the case; first and second vibration plates configured to vibrate in the internal space of the case; a first floating magnet formed at one end of the first vibration plate and configured to generate repulsive force for the first fixed magnet; a second floating magnet formed at one end of the second vibration plate and configured to generate repulsive force for the second fixed magnet; and a vibration frame coupled along the outer circumference of the case; wherein repulsive force is generated between the first and second floating magnets; wherein the first vibration plate extends from the vibration frame and is bent toward the upper part of the case while having any radius of curvature; wherein the second vibration plate extends from the vibration frame and is bent toward the bottom of the case while having any radius of curvature; wherein the first and second vibration plates extend from any point; wherein the magnetic force formed between the fixed magnets and the floating magnets causes the vibrator to generate vibration. There are also disclosed shoes including vibrators, wherein vibrators are inserted into shoes so that a wearer can feel vibration on the soles of his or her feet when walking.

As another technology, there is presented Korean Patent No. 10-2128378 (registered on June 24, 2020; hereinafter referred to as "Document 3") entitled "Vibration Amplification Structure Vibration Device using Magnetic Force."

Document 3 discloses a vibration amplification structure vibration device using magnetic force, the vibration amplification structure vibration device including: a case configured such that upper and lower bodies are coupled to each other to form an accommodation portion inside; a vibration frame interposed between the upper and lower bodies of the case; a first vibration main plate configured such that one end thereof is disposed in an accommodation portion of the case and the other end thereof is connected to the vibration frame; n (where n is an integer of two or more) first vibration sub-plates branched off from the first vibration main plate; and a vibration means configured to vibrate the first vibration main plate and the first vibration sub-plates up and down by means of magnetic force. Accordingly, uniform vibration is provided and the vibration is amplified and transmitted to the outside. KR 102 149 055 B1 discloses vibration generation device embedded in shoes and, more specifically, to a vibration generation device embedded in shoes, which converts an impact, which is generated while a user wears the shoes and walks, into vibrational energy to distribute the impact. KR 2021 0103139 A discloses shoes which consist of: a sole formed of an upper part, an outsole, and a middle sole, and an upper; and a magnetic vibrator stored in the outsole and generating vibration by an impact applied to the shoes during walking. US 2012/030970 A1 discloses a magnet vibration device, which is simple in structure, has little chance for breakdowns, and is applicable to various fields using vibration, including: a case that is changeable in shape by external pressure and has a restoring force when the shape of the case is changed; a vibration plate disposed inside the case and changed in position in connection with the changed shape of the case; a first magnet mounted on the vibration plate; and a second magnet mounted at a position where a repulsive fore is generated between the first magnet and the second magnet when the position of the vibration plate is changed. Finally, also WO 2019/168214 A1 discloses prior art of relevance.

### SUMMARY

An object of the present invention is to provide a vibration module equipped with section-type vibration plates using magnetic force in which there are provided vibration plates with a multipronged structure that are branched off from one vibration frame into two and are then each branched into two at each end, so that up and down amplitude movement is performed based on multiple points, with the result that up and down amplitude movement may be performed as if the fore and hind wings of a butterfly flapped their wings alternately.

Another object of the present invention is to provide a vibration module equipped with section-type vibration plates using magnetic force in which magnets are placed at appropriate locations so that the up and down vibration of the vibration plates can be amplified.

Still another object of the present invention is to provide a vibration module equipped with section-type vibration plates using magnetic force in which the vibration period is increased through the multipronged structure of vibration plates.

In order to accomplish the above objects, the present invention provides a vibration module for an article of footwear, equipped with section-type vibration plates using magnetic force, the vibration module comprising: a case configured such that top housing and a bottom housing are coupled to each other to form an accommodation portion therein; a vibration frame interposed between the top and bottom housings of the case; a first vibration plate configured such that one end thereof is disposed in the accommodation portion of the case and a remaining end thereof is connected to the vibration frame; a second vibration plate configured such that one end thereof is placed in the accommodation portion of the case and a remaining end thereof is connected to the vibration frame, disposed in parallel with the first vibration plate, and provided with a structure facing the first vibration plate; and a vibration means configured to vibrate the first and second vibration plate up and down by means of magnetic force, characterized in that each of the first vibration plate and second vibration plate comprises: a support connected to the vibration frame; a pair of branches branched off from an end of the support; and a pair of disks formed at ends of the respective branches.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a diagram showing the overall configuration of a vibration module equipped with section-type vibration plates using magnetic force according to the present invention;
FIG. 2 is a three-dimensional diagram showing the configurations of a vibration frame and first and second vibration plates;
FIG. 3 is a plan view of FIG. 2;
FIG. 4 is a plan view showing the individual vibration plates and a vibration means disposed in the bottom housing of a case;
FIG. 5 is a diagram showing the overall cross-sectional configuration of a vibration module equipped with section-type vibration plates using magnetic force according to the present invention; and
FIG. 6 is an overall cross-sectional diagram showing the operating states of the individual vibration plates by the vibration means.

### DETAILED DESCRIPTION

Embodiments of the present invention will be described in detail below with reference to the accompanying drawings.

Prior to the following description, it is noted that the terms or words used herein should not be construed as limited to their ordinary or dictionary meanings. It should be understood that when the present application is filed, there may be various equivalents and modifications that can replace the above examples.

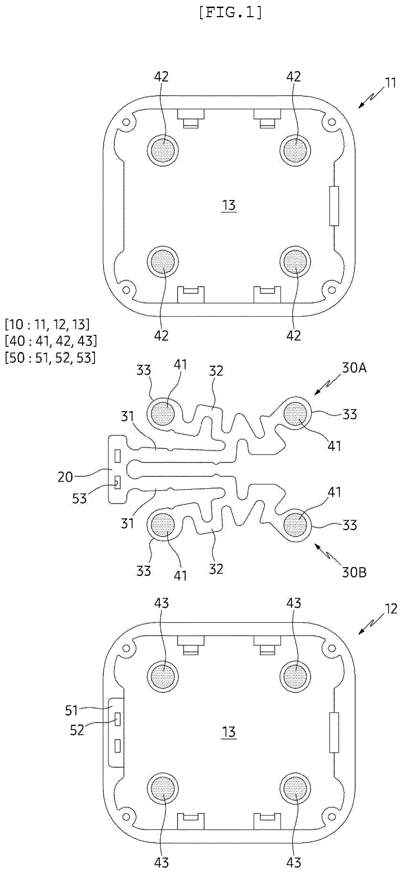

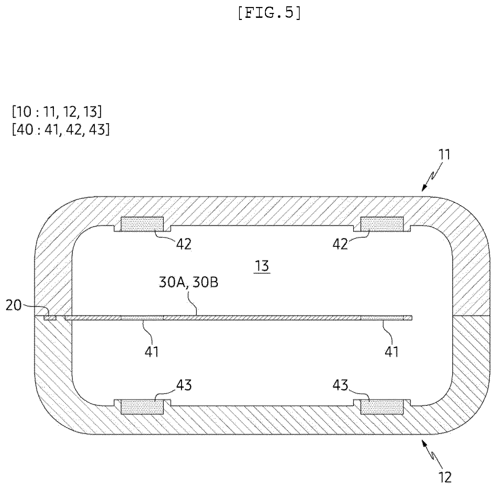

Based on FIG. 5, the top housing side of the case is designated as upper or an upper side, and the bottom housing side of the case is designated as lower or a lower side, and, based on FIG. 1, the vibration frame side is designated as left or a left side, and the disk side located on the right side of each vibration plate is designated as right or a right side.

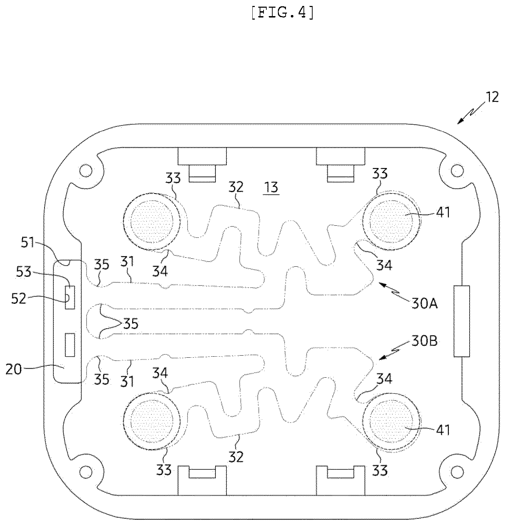

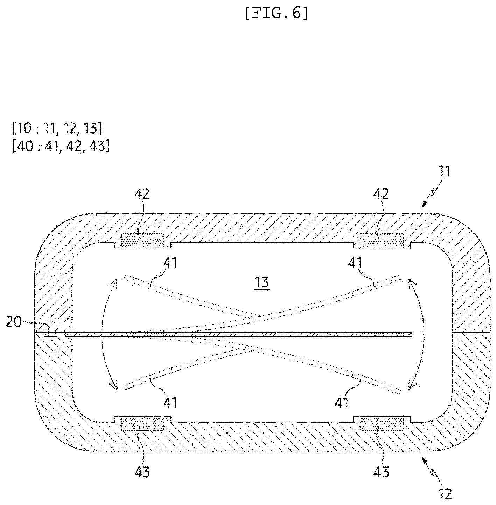

As shown in FIGS. 1 to 6, a vibration module equipped with section-type vibration plates using magnetic force according to the present invention basically includes a case 10, a vibration frame 20, a first vibration plate 30A, a second vibration plate 30B, and a vibration means 40.

As for the individual components, the case 10 has a container structure in which the top housing 11 and the bottom housing 12 are coupled to each other to form an accommodation portion 13 therein, as shown in FIGS. 1 and 4 to 6.

In this case, the top and bottom housings 11 and 12 of the case 10 have structures that face each other. When combined with each other, the top housing 11 and the bottom housing 12 are coupled to each other so that the accommodation portion 13 is formed inside. The mutual coupling may be performed in such a manner that once the above-described mutual coupling is performed using an adhesive or the like, they may be difficult to separate from each other, in such a manner that they are detachably coupled to each other through a male and female engagement structure, or in such a manner that they are coupled to each other so that they are selectively assembled and disassembled through one or more bolts or the like.

In addition, the case 10 is not particularly limited as long as it is capable of transmitting the vibration generated in the accommodation portion 13 to the outside. However, it is preferable that the case 10 be generally made of a material such as plastic or rubber rather than metal.

As shown in FIGS. 1 to 6, the vibration frame 20 is interposed between the top and bottom housings 11 and 12 of the case 10. The vibration frame 20 has an approximately rectangular structure disposed along a portion of the peripheral area where the top and bottom housings 11 and 12 of the case 10 come into contact with each other. The vibration frame 20 may be fixed by being compressed by the top and bottom housings 11 and 12 that are coupled to each other, may be fixed by one or more bolts fastened to the top and bottom housings 11 and 12 for the mutual coupling, or may be fixed by a separate holding means.

As shown in FIGS. 1 to 6, the first vibration plate 30A is configured such that one end thereof is disposed in the accommodation portion 13 of the case 10 and the other ends thereof are connected to the vibration frame 20. It is preferable that the material of the first vibration plate 30A be elastic. In particular, it is preferable that the first vibration plate 30A have a thin and long plate shape for high elasticity. It is preferable that the material of the first vibration plate 30A be copper, zinc, or an alloy thereof.

As shown in FIGS. 1 to 6, the second vibration plate 30B is configured such that one end thereof is disposed in the accommodation portion 13 of the case 10 and the other end thereof is connected to the vibration frame 20. The second vibration plate 30B is arranged in parallel with the first vibration plate 30A. Like the first vibration plate 30A, it is preferable that the second vibration plate 30B be made of an elastic material. In particular, it is preferable that the second vibration plate 30B has a thin and long plate shape for high elasticity. It is preferable that the material of the second vibration plate 30B be copper, zinc, or an alloy thereof.

In addition, the second vibration plate 30B has a structure that faces the first vibration plate 30A.

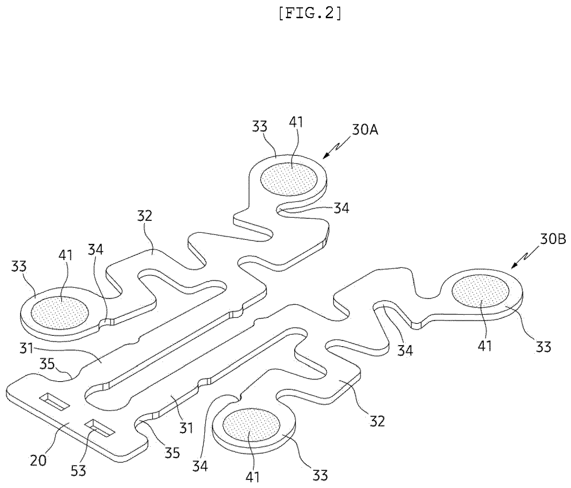

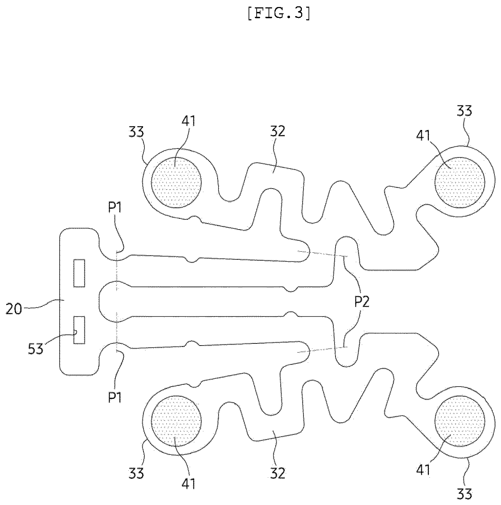

In more detail, each of the first and second vibration plates 30A and 30B includes a support 31 connected to the vibration frame 20, a pair of branches 32 branched off from an end of the support 31, and a pair of disks 33 formed at the ends of the respective branches 32, as shown in FIGS. 2 and 3.

In this case, each of the branches 32 has a multi-bending type structure in which the bending direction is changed more than n times (where n is an integer of two or more). In other words, the individual branches 32 are branched off from the end of the support 31 to the left and right and then repeatedly change their bending direction back and forth, thus each forming an approximately zigzag shape.

In addition, each of the disks 33 has a circular or oval shape when viewed from the top, as shown in FIGS. 2 and 3.

In addition, as shown in FIG. 3, a U-shaped recess 34 recessed inward is formed in a connection portion between each of the branches 32 and a corresponding one of the disks 33. This is intended to facilitate the upward and downward amplitude movement of the disk 33 as the width becomes narrower due to the recess 34.

Furthermore, as shown in FIG. 3, a pair of U-shaped neck depressions 35 recessed in opposite directions are formed in a connection portion between the vibration frame 20 and the support 31 of each of the first and second vibration plates 30A and 30B. This is intended to facilitate the vertical amplitude movement of each of the vibration plates 30A and 30B as the width becomes narrower due to the neck depressions 35.

Therefore, when each of the vibration plates 30A and 30B vibrates up and down based on the vibration frame 20, up and down amplitude movement is performed by the vibration means 40. In particular, as shown in FIG. 3, each of the vibration plates 30A and 30B performs up and down amplitude movement based on the first point P1, and at the same time, each of the branches 32 and each of the disks 33 perform up and down amplitude movement. As a result, by performing large amplitude movement based on the two points P1 and P2 and low amplitude movement based on the multiple bends of each of the branches 32, the up and down amplitude movement is approximately performed as if the front and hind wings of a butterfly alternately flapped their wings.

Therefore, when the external force applied by the action of holding and shaking the case 10 or walking after installing the case 10 on the bottom of a shoe or the like is transmitted to the case 10, each of the vibration plates 30A and 30B is moved up and down based on the first point P1. In this case, each of the vibration plates 30A and 30B performs up and down amplitude movement due to the magnetic force of the vibration means 40 to be described later and the repulsive force between individual magnets, and at the same time, each of the branches 32 and each of the disks 33 also perform up and down amplitude movement based on the second point P2.

The present invention includes the two supports 31 each branched into two branches 32, the two branches 32 branched off from each of the ends of the two supports 31, and the disks 33 formed at the ends of the branches 32. Furthermore, each of the branches 32 also forms a zigzag shape. Up and down amplitude movement is performed based on the first and second points P1 and P2, and also up and down amplitude movement is performed based on the bents of each of the branches 32. When an external force of the same magnitude is applied to the case 10, the vibration can be uniformly transmitted to the outside over a longer vibration period.

As shown in FIGS. 1 and 4 to 6, the vibration means 40 is configured to vibrate the first and second vibration plates 30A and 30B up and down by means of magnetic force.

The vibration means 40 includes: four floating magnets 41 provided on the respective disks 33 of the first and second vibration plates 30A and 30B; four top magnets 42 provided on the top housing 11 of the case 10, and configured to generate repulsive force for the respective floating magnets 41; and four bottom magnets 43 provided on the bottom housing 12 of the case 10, and configured to generate repulsive force for the respective floating magnets 41.

In this case, each of the floating magnets 41 is a magnet whose movement is not fixed and whose movement can occur along with the vibration of a corresponding one of the disks 33 of the vibration plates 30A and 30B. The types of top magnets 42 and bottom magnets 43 are not limited as long as they can form a repulsive force relationship with the respective floating magnets 41. However, it is preferable that they are permanent magnets each having an N pole and an S pole.

In addition, the top and bottom magnets 42 and 43 may be fixed by being attached to the top and bottom housings 11 and 12 of the case 10 by means of an adhesive or the like, or may be fixed by the method of digging depressions and forcefully inserting them into the depressions.

Accordingly, the individual vibration plates 30A and 30B vibrate up and down by means of the magnetic force formed between the floating magnets 41 and the top and bottom magnets 42 and 43 over or under on the floating magnets 41.

Meanwhile, the vibration module equipped with section-type vibration plates using magnetic force according to the present invention further includes a holding means 50.

As shown in FIGS. 1 and 5, the holding means 50 is intended to fix the vibration frame 20 to the case 10.

The holding means 50 includes: a space 51 formed to be depressed into an end of one of the top and bottom housings 11 and 12 in the case 10 and configured such that the vibration frame 20 is inserted and seated therein; two or more posts 52 formed to protrude from the bottom of the space 51; and two or more inserts 53 formed to penetrate the vibration frame 20 and fitted into the respective posts 52.

As a result, as the vibration frame 20 is stably fixed to the case 10 by the holding means 50, the vibration plates 30A and 30B may stably perform up and down amplitude movement based on the vibration frame 20 when external force is transmitted to the case 10.

The vibration module equipped with section-type vibration plates using magnetic force according to the present invention has the greatest effect of transmitting uniform vibration to the outside while increasing the vibration period.

When the vibration module of the present invention is applied to a shoe or the like, the individual vibration plates vibrate due to magnetic force inside the vibration module when a wearer walks. Accordingly, this vibration makes a pedestrian more interested and makes walking more enjoyable. Furthermore, when vibration occurs, a magnetic field is generated and magnetic force is transmitted to the sole of the foot more effectively. As a result, the present invention has the effect of improving blood flow and improving health by stimulating acupuncture points in the sole of the foot and promoting blood circulation.

In the above description of the present invention, the vibration module equipped with section-type vibration plates using magnetic force having the specific shape and structure has been described with reference to the accompanying drawings. However, the present invention may be altered and modified in various forms by those skilled in the art, and such alterations and modifications should be construed as falling within the scope of protection of the present invention, as defined by the attached claims.

## Claims

1. A vibration module for an article of footwear, equipped with section-type vibration plates using magnetic force, the vibration module comprising:
a case (10) configured such that top housing (11) and a bottom housing (12) are coupled to each other to form an accommodation portion (13) therein;
a vibration frame (20) interposed between the top and bottom housings (11) of the case (10);
a first vibration plate (30A) configured such that one end thereof is disposed in the accommodation portion (13) of the case (10) and a remaining end thereof is connected to the vibration frame (20);
a second vibration plate (30B) configured such that one end thereof is placed in the accommodation portion (13) of the case (10) and a remaining end thereof is connected to the vibration frame (20), disposed in parallel with the first vibration plate (30A), and provided with a structure facing the first vibration plate (30A); and
a vibration means configured to vibrate the first and second vibration plate (30B) up and down by means of magnetic force,
**characterized in that** each of the first vibration plate (30A) and second vibration plate (30B) comprises:
a support (31) connected to the vibration frame (20);
a pair of branches (32) branched off from an end of the support (31); and
a pair of disks (33) formed at ends of the respective branches (32).

2. The vibration module of claim 1, wherein each of the branches (32) is formed in a multi-bending structure in which a bending direction is changed more than n times (where n is an integer of two or more).

3. The vibration module of claim 1, wherein a U-shaped recess (34) recess (34)ed inward is formed in a connection portion between each of the branches (32) and a corresponding one of the disks (33).

4. The vibration module of claim 3, wherein a pair of U-shaped neck depressions (35) recess (34)ed in opposite directions are formed in a connection portion between the vibration frame (20) and the support (31) of each of the first and second vibration plate (30B).

5. The vibration module of any one of claim 1 to 4, wherein:
the vibration means comprises: four floating magnets provided on the respective disks (33) of the first and second vibration plate (30B); four top magnets (42) provided on the top housing (11) of the case (10) and configured to generate repulsive force for the respective floating magnets (41); and four bottom magnets (43) provided on the bottom housing (12) of the case (10) and configured to generate repulsive force for the respective floating magnets (41); and
the vibration module further comprises a holding means (50) for fixing the vibration frame (20) to the case (10), the holding means (50) comprising: a space (51) formed to be depressed into an end of one of the top and bottom housings (11) in the case (10) and configured such that the vibration frame (20) is inserted and seated therein; two or more posts (52) formed to protrude from a bottom of the space (51); and two or more inserts (53) formed to penetrate the vibration frame (20) and fitted into the respective posts (52).

## Patentansprüche

1. Vibrationsmodul für einen Fußbekleidungsartikel, das mit magnetkraftbetriebenen Vibrationsplatten in Form von Abschnitten ausgestattet ist, wobei das Vibrationsmodul umfasst:
einen Koffer (10), der so konfiguriert ist, dass ein oberes Gehäuse (11) und ein unteres Gehäuse (12) miteinander verbunden sind, um darin einen Aufnahmeabschnitt (13) zu bilden;
einen Vibrationsrahmen (20), der zwischen dem oberen und dem unteren Gehäuse (11) des Koffers (10) angeordnet ist;
eine erste Vibrationsplatte (30A), die so konfiguriert ist, dass ein Ende davon in dem Aufnahmeabschnitt (13) des Koffers (10) angeordnet ist und ein verbleibendes Ende davon mit dem Vibrationsrahmen (20) verbunden ist;
eine zweite Vibrationsplatte (30B), die so konfiguriert ist, dass ein Ende davon in dem Aufnahmeabschnitt (13) des Koffers (10) angeordnet ist und ein verbleibendes Ende davon mit dem Vibrationsrahmen (20) verbunden ist, parallel zu der ersten Vibrationsplatte (30A) angeordnet ist und mit einer Struktur versehen ist, die der ersten Vibrationsplatte (30A) zugewandt ist; und
ein Vibrationsmittel, das so konfiguriert ist, dass es die erste und die zweite Vibrationsplatte (30B) mittels Magnetkraft auf und ab vibriert,
**dadurch gekennzeichnet, dass** die erste Vibrationsplatte (30A) und die zweite Vibrationsplatte (30B) jeweils umfassen:
eine Halterung (31), die mit dem Vibrationsrahmen (20) verbunden ist;
ein Paar von von einem Ende der Halterung (31) abzweigenden Abzweigungen (32); und
ein Paar von an den Enden der jeweiligen Abzweigungen (32) ausgebildeten Scheiben (33).

2. Vibrationsmodul nach Anspruch 1, wobei jede der Abzweigungen (32) in einer Mehrfachbiegungsstruktur ausgebildet ist, in der eine Biegerichtung mehr als n-mal geändert wird (wobei n eine ganze Zahl von zwei oder mehr ist).

3. Vibrationsmodul nach Anspruch 1, wobei eine nach innen vertiefte U-förmige Aussparung (34) in einem Verbindungsabschnitt zwischen jeder der Abzweigungen (32) und einer entsprechenden der Scheiben (33) ausgebildet ist.

4. Vibrationsmodul nach Anspruch 3, wobei ein Paar von in entgegengesetzten Richtungen vertieften U-förmigen Halsvertiefungen (35) in einem Verbindungsabschnitt zwischen dem Vibrationsrahmen (20) und der Halterung (31) jeder der ersten und zweiten Vibrationsplatte (30B) ausgebildet sind.

5. Vibrationsmodul nach einem der Ansprüche 1 bis 4, wobei:
das Vibrationsmittel vier schwebende Magnete, die auf den jeweiligen Scheiben (33) der ersten und zweiten Vibrationsplatte (30B) vorgesehen sind; vier obere Magnete (42), die an dem oberen Gehäuse (11) des Koffers (10) vorgesehen und so konfiguriert sind, dass sie eine Abstoßungskraft für die jeweiligen schwebenden Magnete (41) erzeugen; und vier untere Magnete (43), die an dem unteren Gehäuse (12) des Koffers (10) vorgesehen und so konfiguriert sind, dass sie eine Abstoßungskraft für die jeweiligen schwebenden Magnete (41) erzeugen, umfasst; und
das Vibrationsmodul ferner ein Haltemittel (50) zum Befestigen des Vibrationsrahmens (20) an dem Koffer (10) umfasst, wobei das Haltemittel (50) einen Raum (51), der so ausgebildet ist, dass er in ein Ende eines der oberen und unteren Gehäuse (11) in dem Koffer (10) eingedrückt werden kann, und so konfiguriert ist, dass der Vibrationsrahmen (20) darin eingesetzt und aufgenommen werden kann; zwei oder mehr Pfosten (52), die so ausgebildet sind, dass sie aus einem Boden des Raums (51) herausragen; und zwei oder mehr Einsätze (53), die so ausgebildet sind, dass sie den Vibrationsrahmen (20) durchdringen und in die jeweiligen Pfosten (52) passen, umfasst.

## Revendications

1. Module de vibration pour article chaussant, équipé de plaques de vibration de type sectionnel utilisant une force magnétique, le module de vibration comprenant :
un boîtier (10) configuré de telle sorte qu'un logement supérieur (11) et un logement inférieur (12) sont couplés l'un à l'autre pour former une partie de réception (13) à l'intérieur;
un cadre de vibration (20) interposé entre les logements supérieur (11) et inférieur du boîtier (10);
une première plaque de vibration (30A) configurée de telle sorte qu'une extrémité de celle-ci est disposée dans la partie de réception (13) du boîtier (10) et une extrémité restante de celle-ci est reliée au cadre de vibration (20);
une deuxième plaque de vibration (30B) configurée de telle sorte qu'une extrémité de celle-ci est disposée dans la partie de réception (13) du boîtier (10) et une extrémité restante de celle-ci est reliée au cadre de vibration (20), disposée en parallèle avec la première plaque de vibration (30A), et pourvue d'une structure en regard de la première plaque de vibration (30A); et
un moyen de vibration configuré pour faire vibrer les première et deuxième plaques de vibration (30B) vers le haut et vers le bas au moyen d'une force magnétique,
**caractérisé en ce que** chacune de la première plaque de vibration (30A) et de la deuxième plaque de vibration (30B) comprend:
un support (31) relié au cadre de vibration (20);
une paire de branches (32) s'étendant à partir d'une extrémité du support (31); et
une paire de disques (33) formés aux extrémités des branches (32) respectives.

2. Module de vibration selon la revendication 1, dans lequel chacune des branches (32) est formée en une structure multi-flexible dans laquelle une direction de flexion change plus de n fois (n étant un entier égal à deux ou plus).

3. Module de vibration selon la revendication 1, dans lequel un évidement en forme de U (34) en retrait vers l'intérieur est formé dans une partie de liaison entre chacune des branches (32) et un disque correspondant parmi les disques (33).

4. Module de vibration selon la revendication 3, dans lequel une paire d'étranglements de col en forme de U (35) en retrait dans des directions opposées est formée dans une partie de liaison entre le cadre de vibration (20) et le support (31) de chacune des première et deuxième plaques de vibration (30B).

5. Module de vibration selon l'une quelconque des revendications 1 à 4, dans lequel :
le moyen de vibration comprend : quatre aimants flottants disposés sur les disques (33) respectifs des première et deuxième plaques de vibration (30B) ; quatre aimants supérieurs (42) disposés sur le logement supérieur (11) du boîtier (10) et configurés pour générer une force de répulsion pour les aimants flottants (41) respectifs ; et quatre aimants inférieurs (43) disposés sur le logement inférieur (12) du boîtier (10) et configurés pour générer une force de répulsion pour les aimants flottants (41) respectifs ; et
le module de vibration comprend en outre un moyen de maintien (50) pour fixer le cadre de vibration (20) au boîtier (10), le moyen de maintien (50) comprenant : un espace (51) formé pour être enfoncé dans une extrémité de l'un parmi les logements supérieur (11) et inférieur dans le boîtier (10) et configuré de telle sorte que le cadre de vibration (20) est inséré et logé à l'intérieur ; deux montants (52) ou plus formés pour faire saillie à partir d'un fond de l'espace (51) ; et deux inserts (53) ou plus formés pour pénétrer dans le cadre de vibration (20) et ajustés dans les montants (52) respectifs.
